# EUROPÄISCHE PATENTANMELDUNG

(11) **EP 0 884 585 A2**
(43) Veröffentlichungstag der Anmeldung: **16.12.1998**
(21) Anmeldenummer: 98110490.4
(22) Anmeldetag: 08.06.1998
(51) Int. Cl.: G01N 25/48

(54) **Vorrichtung zur Differential-Scanning-Kalorimetrie**

(30) Priorität: 06.06.1997 DE 19723813; 09.06.1997 DE 19724129
(71) Anmelder: Netzsch Gerätebau GmbH, 95100 Selb (DE)
(72) Erfinder: Bräuer, Gerhard, 95100 Selb (DE); Dusza, Laszlo Dr., 95100 Selb (DE); Schmidt, Martin, 95100 Selb (DE)
(74) Vertreter: Münich, Wilhelm, Dr.

(57) **Zusammenfassung**

Beschrieben wird eine Vorrichtung zur Differential-Scanning-Kalorimetrie, mit
- einer Temperiereinrichtung, die eine zu untersuchende Substanz (S) und ein Referenzmaterial (R) einem vorgebbaren Temperaturprogramm unterzieht, und
- einer Sensoreinheit, die Temperaturfühler für die Substanz und das Referenzmaterial aufweist, und die Differenz der Energiezufuhr zu der Substanz und dem Referenzmaterial als Funktion der Temperatur erfaßt.

Die Erfindung zeichnet sich dadurch aus, daß die Sensoreinheit eine Sensorplatte (6,6 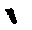 ), die thermisch mit der Substanz und dem Referenzmaterial verbunden ist, und eine Wärmesenke aufweist, deren Wärmeleitungseigenschaften besser als die der Sensorplatte (6,6 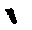 ) sind, und die mit der Sensorplatte thermisch gekoppelt ist.

## Beschreibung

### Technisches Gebiet

Die Erfindung bezieht sich auf eine Vorrichtung zur Differential-Scanning-Kalorimetrie gemäß dem Oberbegriff der Patentansprüche 1 bzw. 2.

### Stand der Technik

Die Differentialthermoanalyse ist eine physikalischchemische Analysenmethode zur Bestimmung der Temperaturfunktionen von physikalisch-chemischen Größen, mit deren Hilfe Rückschlüsse auf Phasenumwandlungen, Reaktionskinetik, Stabilität von Reaktionsgemischen, thermisches Verhalten von Kunststoffen, Kristallstrukturen und deren Umwandlungspunkten, Reaktivität instabiler Verbindungen usw. sowohl bei Metallen als auch bei Nichtmetallen möglich werden.

Die im Rahmen der Differentialhermoanalyse weiterentwickelte 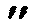 Differential-Scanning-(K)Calorimetrie" (DSC) ist eine Technik bei der die Differenz der Energiezufuhr zu einer Substanz und einem Referenzmaterial als Funktion der Temperatur gemessen wird, während die Substanz und gleichzeitig das Referenzmaterial einem geregelten Temperaturprogramm unterzogen werden.

Bei der Wärmestromkalorimetrie wird der gemessenen Temperaturdifferenz zwischen der Probe und dem Referenzmaterial ein Wärmestrom zugeordnet. Sobald die sich zeitlinear ändernde Ofentemperatur eine Reaktion, wie z.B. eine Umwandlung oder einen Übergang in der Probe hervorruft, und durch diese Umwandlung Wärme bzw. einen Wärmebedarf erzeugt wird, wird die sonst kontinuierlich steigende oder sinkende Temperatur der Substanz zusätzlich verändert. Diese Temperaturperturbation bildet in der Regel einen Peak im Temperaturverlauf.

Die Differential-Scanning-Calorimetrie arbeitet dabei nach folgendem Prinzip:

In einem Ofen befinden sich wenigstens zwei vorzugsweise symmetrisch angeordnete Halterungen, von denen die eine die zu untersuchende Substanz und die andere das Referenzmaterial aufnimmt. Das Referenzmaterial ist so gewählt, daß es in dem zu untersuchenden Temperaturbereich keine thermische Reaktion, wie beispielsweise eine Phasenübergang zeigt.

Zur Durchführung der Untersuchung wird insbesondere die Aufheiz- bzw. die Abkühlgeschwindigkeit so gewählt, daß sich die Temperatur des Referenzmaterials linear mit der Zeit ändert. Die Temperatur der zu untersuchenden Substanz und/oder die des Referenzmaterials und/oder die Temperaturdifferenz zwischen beiden werden mit Sensoren, wie beispielsweise Thermoelementen gemessen und ihr zeitlicher Verlauf registriert. Wenn in der zu untersuchenden Substanz eine exotherme (z.B. Kristallisation) oder endotherme (z.B. Zersetzung) Reaktion auftritt, wird ihre Temperatur über oder unter derjenigen des Referenzmaterials liegen.

Zur Durchführung der vorstehend genannten Differential-Scanning-Calorimetrie eignen sich insbesondere Kalorimeter, die erstens auch bei sehr kleinen freiwerdenden Reaktionswärmen ein genügend großes Differenzsignal generieren - derartige Kalorimeter weisen eine hohe Detektivität bzw. eine hohe Empfindlichkeit auf - und die zweitens über eine kleine interne Zeitkonstante verfügen, so daß erfaßte Temperaturpertubationen (sogenannte Peaks) nach dem Stattfinden einer exothermen bzw. endothermen Reaktion derart schnell abklingen, daß eine Überlappung mit einer eventuell unmittelbar zeitlich darauffolgenden Reaktion, die ansonsten undetektierbar wäre, vermieden wird.

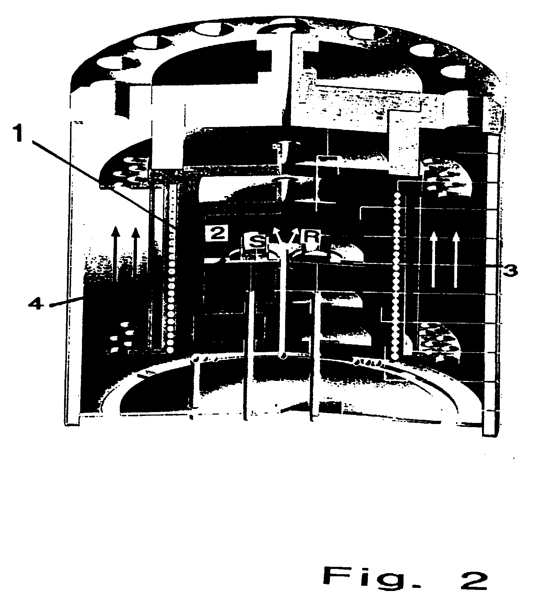

Der Aufbau eines an sich bekannten Differential-Scanning-Kalorimeters ist in Figur 2 dargestellt. Zum einen besteht das Kalorimeter aus einem thermisch gut leitendem Ofenkörper 1, der einen Probenraum 2 einschließt, in dem eine Wärmesensorikeinheit 3 eingebracht ist. Die Wärmesensorikeinheit 3 weist eine plattenartig geformte, thermisch schlecht leitende Sensorplatte 4 auf, auf der (wenigstens) ein Behältnis für (wenigstens eine) zu untersuchende Substanz S sowie (wenigstens) ein weiteres Behältnis für (wenigstens) eine Referenz(substanz) R vorgesehen ist. Direkt unter dem Probenbehältnis bzw. dem Referenzbehältnis sind Temperaturfühler und insbesondere Thermoelemente mit Thermofühlern vorgesehen, die die Wärmetönung an der Probe bzw. Referenz unmittelbar erfassen.

Die in der zu untersuchenden Substanz auftretende Reaktionswärme wird von der Substanz zunächst auf die Sensorplatte 4 übertragen unter der der Meßfühler des Thermoelementes angebracht ist. Um ein möglichst großes Meßsignal bei Temperaturänderungen zu erhalten, ist es von Vorteil, daß die Sensorplatte selbst möglichst wenig Wärme aufnimmt, jedoch für ein schnelles Abklingen eines Peaks die Ausbreitung der Wärme an den großvolumigen Ofen als Wärmesenke schnell ermöglicht. In dem in Figur 2 dargestellten Fall ist daher die Wärmesensorikeinheit 3 unmittelbar an dem Ofenkörper 1 fest angebracht.

Es hat sich jedoch herausgestellt, daß durch eine feste thermische Kopplung zwischen Wärmesensorikeinheit und Ofenkörper nicht nur ein schnell und einfach durchführbarer Austausch der Wärmesensorikeinheit unmöglich ist, sondern daß auch die Empfindlichkeit der Meßanordnung sowie die Zeitkonstante, mit der ein Meßsignal auf den eten Teil abklingen kann, an nicht weiter optimierbare Grenzen stößt.

### Darstellung der Erfindung

Der Erfindung liegt die Aufgabe zugrunde, eine Vorrichtung zur Differential-Scanning-Kalorimetrie gemäß dem Oberbegriff der Patentansprüche 1 bzw. 2 derart weiterzubilden, daß sowohl die Empfindlichkeit der Meßvorrichtung als auch die internen Zeitkonstanten gegenüber bekannten Vorrichtungen verbessert werden. Darüberhinaus soll die erfindungsgemäße Vorrichtung leicht an unterschiedliche, zu messende Substanzen adaptierbar sein.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche.

Bei einer Ausgestaltung der Erfindung weist die Sensoreinheit eine Sensorplatte auf, die thermisch mit der Substanz und dem Referenzmaterial verbunden ist Ferner sind Mittel vorgesehen, durch die der Hauptteil des Reaktionswärmeflusses in der Sensorplatte zentral abgeleitet wird.

Bei einer alternativen oder zusätzlichen Ausgestaltung der Erfindung weist die Sensoreinheit eine Sensorplatte, die thermisch mit der Substanz und dem Referenzmaterial verbunden ist, und eine Wärmesenke auf, deren Wärmeleitungseigenschaften besser als die der Sensorplatte sind, und die mit der Sensorplatte thermisch gekoppelt und thermisch nicht unmittelbar mit der Temperiereinrichtung verbunden ist, so daß eine zentrale Ableitung des Reaktionswärmeflusses erfolgt.

Erfindungsgemäß wird also eine gattungsgemäße Vorrichtung derart weitergebildet, daß die Sensorplatte für die Substanz sowie für die Referenz thermisch an eine Wärmesenke gekoppelt ist, deren Wärmeleitungseigenschaft besser als die der Sensorplatte ist, und daß die Wärmesenke an einer wärmeaufnehmenden Basisplatte befestigt ist, die lösbar fest in den Probenraum des Ofenkörpers einbringbar ist.

Im Gegensatz zum bekannten Stand der Technik ist die Wärmesenke nicht der Ofenkörper selbst, vielmehr besteht sie aus einer vorzugsweise runden Platte, auf der die Sensorplatten angeordnet sind, auf die jeweils die Substanz bzw. die Referenz aufgebracht werden können.

Die Wärmesenke, die aus einem thermisch gut leitendem Material mit einer Temperaturleitfähigkeit > 0,1 cm²/s gefertigt ist, steht in unmittelbarem thermischen Kontakt mit den Sensorplatten, die aus Material mit schlechteren Temperaturleitfähigkeiten < 0,1 cm²/s gefertigt sind.

Als besonders vorteilhaft hat sich erwiesen, die Wärmesenke aus Silber zu fertigen oder zumindest die Oberfläche der Wärmesenke mit einer ca. 2mm dicken Silberschicht zu überziehen.

Ferner sind die Sensorplatten als Nickelchrom (NiCr)-Folien vorzugsweise mit einer Folienstärke von 0,5 mm ausgebildet. Durch die vorteilhafte Materialkombination aus Silber und Nickelchrom wird erreicht, daß die während der Reaktion der Substanz entstehende Reaktionswärme besser erfaßt wird und schneller über die Silberschicht abgeleitet werden kann, so daß kurze und schnell hintereinander auftretende Meßspitzen ausgewertbar sind, und eine außergewöhnlich hohe Peaktrennung erreichbar ist.

Die mit der Wärmeabfuhr verbundene Zeitkonstante ist grundsätzlich abhängig von der Größe bzw. dem Durchmesser sowie der Dicke der Sensorplatte, der Art des Kontaktes zwischen Sensorplatte und Wärmesenke sowie der Temperaturleitfähigkeit der Wärmesenke bzw. des Sensors. So kann durch Reduzierung der Dicke der Sensorplatte die Empfindlichkeit der Meßanordnung deutlich gesteigert werden.

Eine weitere Erhöhung der Empfindlichkeit ist durch Reduzieren des thermischen Kontaktes zwischen Sensorplatten und Wärmesenke erzielbar, indem beispielsweise der Verbindungsbereich gezielt durch Schnitte oder Bohrungen unterbrochen wird. Jedoch haben diese Maßnahmen eine Vergrößerung der Zeitkonstante zur Folge.

Die Verbindung zwischen der vorzugsweise aus Nickelchrom-Folie ausgebildeten Sensorplatten mit der Wärmesenke kann mit an sich bekannten Löt- bzw. Schweißtechniken hergestellt werden. Vorzugsweise eignet sich für eine derartige Verbindung Diffusionsschweißen, bei dem ein besonders guter Wärmeübergang zwischen Sensorplatte und Wärmesenke erreicht wird, so daß eine beschleunigte Wärmeableitung von der Sensorplatte auf die Wärmesenke, die für die Trennschärfe zwischen zwei aufeinanderfolgenden Meßpeaks notwendig sind, ermöglicht wird.

Die erfindungsgemäße Kombination aus Sensorplatte und Wärmesenke steht nicht in einem unmittelbaren Kontakt zum Ofenkörper, sondern wird von einer Basisplatte getragen, die eine mittig erhabene Konsole aufweist, auf der die Wärmesenke über eine möglichst geringe Fläche aufliegt. Die unter der Wärmesenke befindliche Basisplatte, die vorzugsweise aus einem gut wärmeleitendem Material gefertigt ist, sieht an ihrem peripheren Bereich lösbare Befestigungsvorrichtungen vor, über die sie lösbar fest mit dem Ofenkörper verbindbar ist.

Als besonders vorteilhaft eignen sich hierzu Schraub-, Klemm- oder Steckverbindungen, die zusätzlich mittels Federkraft verstärkt werden können.

Ein weiterer Gesichtspunkt der erfindungsgemäßen Kombination aus Sensorplatte und Wärmesenke ist die Anordnung der Sensorplatte auf der Wärmesenke, die jeweils in gleichem Abstand von einer die Wärmesenke durchsetzenden Mittelachse angeordnet sind, so daß sich ein von der Basisplatte herrührender Wärmefluß, der sich über die Wärmesenke auf die Sensorplatten erstrecken würde, in gleicher Weise sowohl auf die Sensorplatte mit Substanz als auch mit Referenz verteilt, so daß eine derartige Temperaturirritationen aufgrund der differentiellen Meßtechnik heraus mittelbar sind.

Aufgrund der lösbar festen Verbindung zwischen Basisplatte und Ofenkörper kann diese samt Wärmesenke und Sensorplatten leicht aus dem Ofenkörper entnommen werden, so daß ein Austausch von Sensorplatten nebst Wärmesenke ohne großen technischen Aufwand durchführbar ist.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung beschrieben, in der zeigen:
- Fig. 1: eine Querschnittsdarstellung durch ein Differential-Scanning-Kalorimeter mit einer erfindungsgemäßen Kombination aus Sensorplatten und Wärmesenke,
- Fig. 2: eine perspektivische Querschnittsdarstellung eines bekannten Kalorimeters gemäß dem Stand der Technik,
- Fig. 3: eine Querschnitt durch eine erfindungsgemäße Anordnung bestehend aus Sensorplatten, Wärmesenke, Basisplatte sowie weiteren Haltevorrichtungen,
- Fig. 4: eine Detaildarstellung aus Figur 3,
- Fig. 5: eine Draufsicht auf eine erfindungsgemäße Wärmesenke, und
- Fig. 6: einen Querschnitt durch eine Sensorplatten-Wärmesenke-Kombination.

### Darstellung von Ausführungsbeispielen

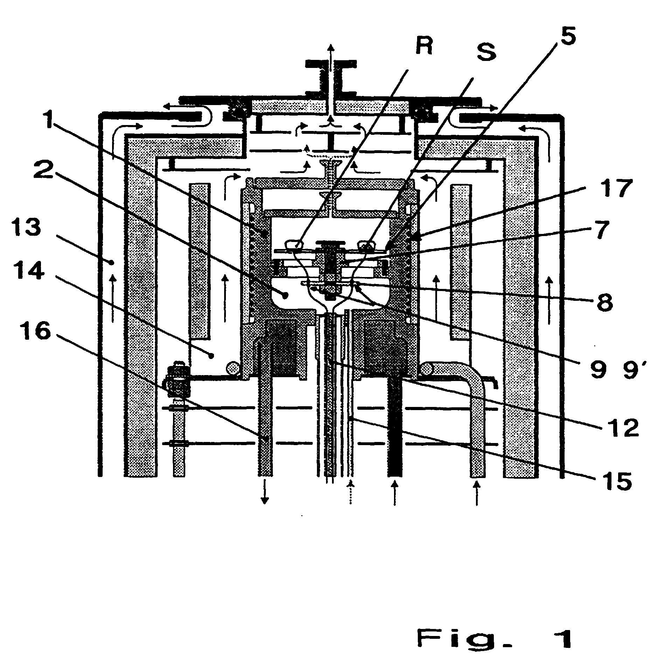

Der in Figur 1 dargestellte Querschnitt durch ein erfindungsgemäß ausgestaltetes Differential-Scanning-Kalorimeters zeigt einen Ofenkörper 1, der einen Probenraum 2 einschließt. In dem Probenraum 2 ist eine erfindungsgemäße Kombination aus Sensorplatte und Wärmesenke 5, auf die in den nächsten Figuren im einzelnen eingegangen wird, vorgesehen. Die Wärmesenke 5 weist auf ihrer Oberfläche Sensorplatten 6 auf, auf denen jeweils getrennt die zu untersuchende Substanz S und die Referenz R aufbringbar sind. Die Wärmesenke 5 ist ohne den Ofenkörper 1 zu berühren im Probenraum 2 eingebracht. Eine Basisplatte 7, die mittig eine erhabene Konsole 7' aufweist, unterstützt die Wärmesenke 5 in ihrem Mittenbereich von unten. In dem gezeigten Ausführungsbeispiel gemäß Figur 1 ist die Basisplatte 7 lösbar fest mit einer entsprechend vorgesehenen Innenkontur des Ofenkörpers 1 verbunden. Vorteilhafte Verbindungen hierfür stellen Federkraft-beaufschlagte Klemm- oder Steckverbindungen dar. Wärmesenke 5, Basisplatte 7 sowie eine unter der Basisplatte 7 angeordnete Trägerplatte 8, auf der Thermoelemente 9 und 9' vorgesehen sind, sind über eine Schraubverbindung 10 lösbar fest miteinander verbunden. Die für die Thermoelemente erforderlichen elektrischen Zuleitungen 11 und 11' werden über ein Kapillarrohr 12, das vorzugsweise aus Aluminiumoxid gefertigt ist, vom Innenraum des Probenraumes 2 nach außen geführt. Zur unmittelbaren Erfassung der Wärmeentwicklung an der Substanz S sowie Referenz R sind unterhalb der Sensorplatten Thermofühler angeordnet, die mit den Thermoelementen 9 und 9' verbunden sind.

Der durch die vorstehend beschriebenen Komponenten 5 bis 12 zusammengesetzte Wärmestromsensor ist einerseits lösbar fest mit dem Ofenkörper 1 verbunden und weist zur elektrischen Kontaktierung am unteren Ende des Kapillarrohres 12 Steckkontakte A zum Anschluß der Thermoelemente 9, 9' auf. Auf diese Weise ist der Wärmestrom-Sensor als Modul in den Probenraum 2 des Ofenkörpers 1 beliebig austauschbar, wodurch Reparaturen vor Ort schnell und preiswert durchführbar sind. Ebenso können verschiedene Sensortypen, die in unterschiedliche Meßaufgaben optimiert sind, in den Ofenkörper implimentiert werden. Durch die Möglichkeit der leichten Austauschbarkeit können auch spätere Entwicklungen auf dem Gebiet der Sensoren leichter berücksichtigt werden.

Aus der Figur 1 geht überdies hervor, daß der Wärmestrom-Sensor zentral und mittig innerhalb des Ofenkörpers befestigt ist. Durch diese Anordnung sowie das Vorsehen verschiedener Kühlkanäle (durch den äußeren Kanal 13 wird Kühlluft, durch innere Kanäle 14 wird Schutzgas, durch unmittelbar in den Ofenkörper eindringende Kanäle 16 wird flüssiger oder gasförmiger Stickstoff zur Kühlung und in den Innenraum des Ofenkörpers wird durch einen Zuführkanal 15 Spülgas getrieben) kann durch die gasdichte Konstruktion des Gehäuses trotz bei hohen Probeninnenraumtemperaturen von etwa 700°C eine Oberflächenaußentemperatur von 60°C gewährleistet werden, gleichzeitig wird Kondenswasser oder Eisbildung bei Tiefentemperaturen verhindert.

Ein besonderer Aspekt stellt in diesem Zusammenhang auch die direkte Kühlung des Ofenkörpers 1 dar, der im übrigen über Heizwicklungen 17 aufheizbar ist. Die direkte Kühlung erfolgt in effizienter Weise mittels flüssigem oder gasförmigem Stickstoff, der von unten in den Ofenkörper 1 eingeleitet wird, auf direkte Weise, wobei die Wandung zwischen den Kühlkammern 16 und der Probenkammer 2 dünn gehalten werden soll, wodurch der Wärmeübergang und somit die Kühlleistung erhöht wird.

Der Ofenkörper 1 selbst besteht aus vergoldetem Silber und läßt maximale Arbeitstemperaturen von 700°C zu. Der Ofenkörper zeichnet sich vorzugsweise durch seine geringe Masse aus, wodurch schnelle Heiz- und Kühlraten bei niedrigen Kühlmittelverbrauch erzielbar sind.

Figur 2 stellt ein an sich bekanntes Kalorimeter dar, das bereits in der Beschreibungseinleitung erklärt und entsprechend gewürdigt ist. Wesentlich bei dem in Figur 2 gezeigten Aufbau des Kalorimeters ist die direkte und feste Verbindung zwischen der Wärmesensorplatte 3 mit dem Ofenkörper 1, womit eine Reihe von Nachteilen verbunden ist.

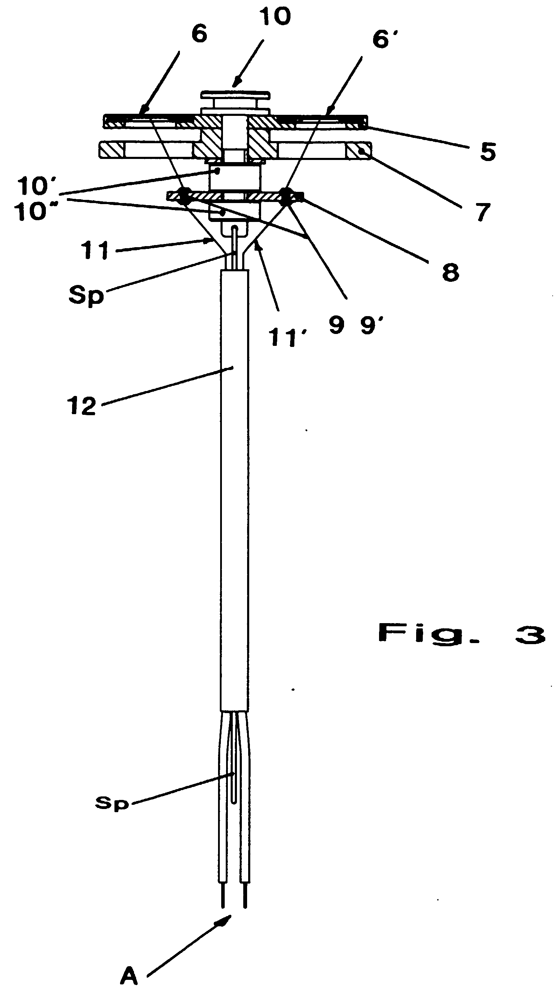

Figur 3 stellt den Gesamtguerschnitt durch den neuen Aufbau eines Wärmestromsensors dar.

Die vorzugsweise aus Nickelchrom gefertigten, folienartigen Sensorplatten 6, 6' stehen in unmittelbarem thermischem Kontakt zur Wärmesenke 5, die vorzugsweise mit einer Silberschicht überzogen ist oder vollständig aus Silber gefertigt ist. Die als Platte ausgebildete Wärmesenke 5 liegt ansonsten freitragend ausschließlich auf der erhabenen Konsole 7' einer unmittelbar unter der Wärmesenke 5 angeordneten Basisplatte 7 auf. Die Wärmesenke 5, Basisplatte 7 sowie eine für die Thermoelemente 9, 9' vorgesehene Trägerplatte 8 ist über eine Schraubverbindung 10 fest aber lösbar miteinander verbunden. Distanzmuttern 10', 10'' sorgen für eine entsprechende räumliche Distanzierung zwischen Trägerplatte 8 und Basisplatte 7. Zur Wärmestromerfassung sind an der Unterseite der Sensorplatten 6, 6' Thermofühler, die mit den Thermoelementen 9, 9' verbunden sind, vorgesehen. Eine elektrische Kontaktierung der Thermoelemente 9, 9' erfolgt über elektrische Zuleitungen 11, 11' die über ein Kapillarrohr 12 nach unten geführt sind und an der Unterseite Anschlüsse A aufweisen. Der Wärmestromsensorkopf ist mit Hilfe eines Spanndrahtes Sp durch das Kapillarrohr nach unten spannbar.

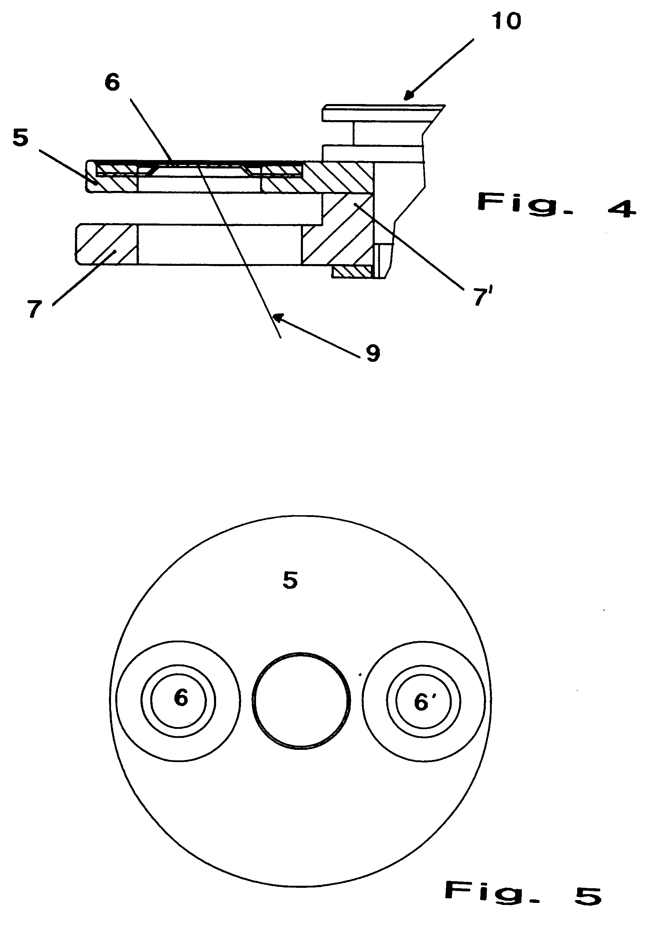

Figur 4 stellt eine Detailldarstellung des Wärmesensorkopfes gemäß Figur 3 dar. Die vorzugsweise aus Nickelchrom gefertigte folienartige Sensorplatte 6 ist an ihrem Randbereich thermisch mit der Wärmesenke 5 verkoppelt. Die Verbindung kann vorzugsweise als Löt- oder Schweißverbindung ausgestaltet werden. Eine bevorzugte Verbindungstechnik stellt die Diffusionsschweißtechnik hierfür dar. Über die zentrale Konsole 7' liegt die Wärmesenke mittig auf der Basisplatte 7 auf, die aus einem wärmeaufnehmenden Material gefertigt ist. Unmittelbar an der Unterseite der Sensorplatte 6 befindet sich ein Teil des Thermoelementes 9, der als Thermofühler ausgebildet ist, um die Wärmetönung an dieser Stelle zu erfassen. Eine zu untersuchende Probe bzw. eine Referenz ist auf der Oberseite der Sensorplatte 6 aufbringbar. Möglicherweise inhomogene Temperaturverteilungen des Ofens können auf diese Weise ausgeglichen werden, zumal Temperaturirritationen, die von der Konsole auf die Wärmesenke 5 gerichtet sind, wirken symmetrisch sowohl auf die Sensorplatte der Substanz als auch auf die der Referenz, die symmetrisch zur Mittenachse der Wärmesenke 5 angeordnet sind.

Figur 5 stellt eine Draufsicht auf die Wärmesenke 5 dar, aus der hervorgeht, daß die Sensorplatten 6 als runde Platten ausgebildet sind, die mit ihrem runden Peripheriebereich mit der Wärmesenke 5 fest verbunden ist. Eine Erhöhung der Empfindlichkeit kann durch Reduzieren des thermischen Kontaktes zwischen den Sensorplatten 6, 6' und der Wärmesenke 5 beispielsweise durch beliebige Art der Materialunterbrechung wie Schneiden, Bohren etc. erzielt werden, was jedoch zu einer Vergrößerung der Zeitkonstante führt.

Die aus Silber gefertigte Wärmesenke 5 weist zentral eine Bohrung auf, durch die die Schraubenbefestigung 10 durchgeführt werden kann.

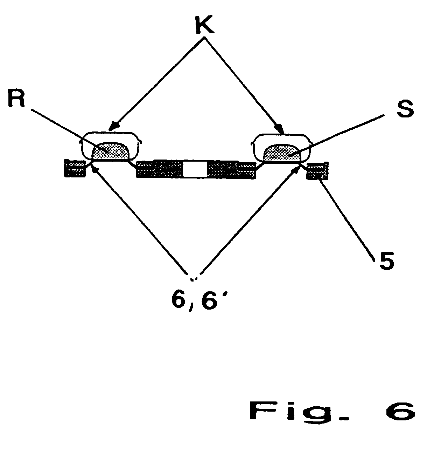

Schließlich ist in Figur 6 eine weitere Querschnittsdarstellung durch die Wärmesenke 5, Sensorplatten 6, 6' dargestellt. In diesem Ausführungsbeispiel sind eine zu untersuchende Substanz S sowie eine Referenz R auf den jeweiligen Sensorplatten vorgesehen. Die Substanz S sowie die Referenz R befinden sich dabei im geschlossenem Kapseln K. Auf diese Weise kann die in der Kapsel K stattfindende Wärmeentwicklung bzw. -verbrauch vermehrt auf die Sensorplatten 6, 6' gerichtet werden.

## Patentansprüche

1. Vorrichtung zur Differential-Scanning-Kalorimetrie, mit
- einer Temperiereinrichtung, die eine zu untersuchende Substanz (S) und ein Referenzmaterial (R) einem vorgebbaren Temperaturprogramm unterzieht, und
- einer Sensoreinheit, die Temperaturfühler für die Substanz und das Referenzmaterial aufweist, und die die Differenz der Energiezufuhr zu der Substanz und dem Referenzmaterial als Funktion der Temperatur erfaßt,
dadurch **gekennzeichnet**, daß die Sensoreinheit eine Sensorplatte (6,6 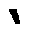 ) aufweist, die thermisch mit der Substanz und dem Referenzmaterial verbunden ist, und daß Mittel vorgesehen sind, durch die der Hauptteil des Reaktionswärmeflusses in der Sensorplatte zentral abgeleitet wird.

2. Vorrichtung nach Anspruch 1 oder nach dem Oberbegriff des Anspruchs 1,
dadurch **gekennzeichnet**, daß die Sensoreinheit eine Sensorplatte (6,6 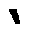 ) aufweist, die thermisch mit der Substanz und dem Referenzmaterial verbunden ist, und eine Wärmesenke aufweist, deren Wärmeleitungseigenschaften besser als die der Sensorplatte (6,6 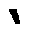 ) sind, und die mit der Sensorplatte thermisch gekoppelt und thermisch nicht unmittelbar mit der Temperiereinrichtung verbunden ist, so daß eine zentrale Ableitung des Reaktionswärmeflusses erfolgt.

3. Vorrichtung nach Anspruch 2 in Verbindung mit Anspruch 1,
dadurch **gekennzeichnet**, daß die Sensorplatte und die Wärmesenke in ihrem zentralen Bereich thermisch gekoppelt sind.

4. Vorrichtung nach einem der Ansprüche 1 bis 3,
dadurch **gekennzeichnet**, daß die Wärmesenke (5) an einer wärmeaufnehmenden Basisplatte (7) befestigt ist.

5. Vorrichtung nach einem der Ansprüche 1 bis 4,
dadurch **gekennzeichnet**, daß die Wärmesenke (5) als runde Platte ausgebildet ist.

6. Vorrichtung nach Anspruch 4 oder 5,
dadurch **gekennzeichnet**, daß die Basisplatte (7) eine mittig erhabene Konsole (7 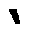 ) aufweist, auf deren Oberfläche die Wärmesenke (5) aufliegt.

7. Vorrichtung nach einem der Ansprüche 4 bis 6, dadurch **gekennzeichnet**, daß die Wärmesenke (5) und die
Basisplatte (7) über eine mittige Schraubverbindung (10) lösbar verbunden sind.

8. Vorrichtung nach einem der Ansprüche 4 bis 7,
dadurch **gekennzeichnet**, daß die Basisplatte (7) lösbar in die Temperiereinrichtung (1) derart eingebracht ist, daß sie an ihrem Umfangsrand mit der Temperiereinrichtung thermisch gekoppelt ist.

9. Vorrichtung nach Anspruch 8,
dadurch **gekennzeichnet**, daß eine Schraub-, Klemm- oder/und federkraftbeaufschlagte Verbindung die thermische Kopplung zwischen Temperiereinrichtung und Basisplatte herstellt.

10. Vorrichtung nach einem der Ansprüche 1 bis 9,
dadurch **gekennzeichnet**, daß die Substanz (S) sowie das Referenzmaterial (R) symmetrisch zur Mittelachse der Wärmesenke und der Sensorplatte angeordnet sind.

11. Vorrichtung nach einem der Ansprüche 1 bis 10,
dadurch **gekennzeichnet**, daß die Sensorplatte (6,6 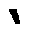 ) als dünne Folie ausgebildet ist.

12. Vorrichtung nach einem der Ansprüche 1 bis 11,
dadurch **gekennzeichnet**, daß die Sensorplatte (6,6 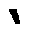 ) aus einem Material mit einer mittleren bis kleinen Temperaturleitfähigkeit, beispielsweise von weniger als 0,1 cm²/s besteht.

13. Vorrichtung nach einem der Ansprüche 1 bis 12,
dadurch **gekennzeichnet**, daß die Wärmesenke (5) aus einem Material mit einer signifikant höheren Temperaturleitfähigkeit als die der Sensorplatte, beispielsweise von mehr als 0,2 cm^{2/}s besteht.

14. Vorrichtung nach einem der Ansprüche 1 bis 13,
dadurch **gekennzeichnet**, daß die Temperiereinrichtung das Aufheizen und/oder das Abkühlen der zu untersuchenden Substanz und des Referenzmaterials erlaubt.

15. Vorrichtung nach Anspruch 14,
dadurch **gekennzeichnet**, daß die Temperiereinrichtung ein Ofen ist.

16. Vorrichtung nach Anspruch 15,
dadurch **gekennzeichnet**, daß die Temperiereinrichtung das Einleiten eines Kühlmittels erlaubt.

17. Vorrichtung nach Anspruch 16,
dadurch **gekennzeichnet**, daß das Kühlmittel in einen Raum des Ofens unterhalb der Sensorplatte und der Wärmesenke eingeleitet wird.

18. Vorrichtung nach einem der Ansprüche 1 bis 17,
dadurch **gekennzeichnet**, daß auf der Sensorplatte (6,6 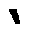 ) Probenbehälter für die Substanz (S) und das Referenzmaterial (R) vorgesehen sind.

19. Vorrichtung nach einem der Ansprüche 1 bis 18,
dadurch **gekennzeichnet**, daß der Temperaturfühler in der Mitte der Sensorplatte angeordnet und mit dieser verbunden ist.

20. Vorrichtung nach einem der Ansprüche 1 bis 19,
dadurch **gekennzeichnet**, daß die Sensorplatte (6,6 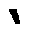 ) und die Wärmesenke (5) mittels Diffusionsschweißen miteinander verbunden sind.

21. Vorrichtung nach einem der Ansprüche 1 bis 20,
dadurch **gekennzeichnet**, daß ein zugentlastetes Kapillarrohr (12) vorgesehen ist, durch das die für die Temperaturfühler (9,9 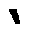 ) erforderlichen elektrischen Anschlußleitungen (A) geführt sind.

22. Vorrichtung nach einem der Ansprüche 1 bis 21,
dadurch **gekennzeichnet**, daß mehr als eine Sensorplatte für die Auflage eines zu untersuchenden Substrates vorgesehen ist, so daß mehrere Substanzen bzw. Referenzmaterialien simultan gemessen werden können.

23. Vorrichtung nach einem der Ansprüche 1 bis 22,
dadurch **gekennzeichnet**, daß die thermische Kopplung zwischen Sensorplatte (6,6 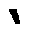 ) und Wärmesenke (5) Materialunterbrechungen aufweist.

24. Vorrichtung nach Anspruch 23,
dadurch **gekennzeichnet**, daß die Materialunterbrechungen durch Schnitte oder Bohrungen erzielbar sind.

25. Vorrichtung nach einem der Ansprüche 1 bis 24,
dadurch **gekennzeichnet**, daß durch Dickenvariation der Sensorplatte (6,6 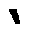 ) und/oder durch Veränderung des thermischen Kontaktes zwischen Sensorplatte (6,6 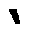 ) und Wärmesenke (5) die Empfindlichkeit zur Erfassung des Wärmestromes einstellbar ist.

26. Vorrichtung nach einem der Ansprüche 1 bis 25,
dadurch **gekennzeichnet**, daß das System Sensorplatte, Wärmesenke, Tragplatte austauschbar ist.
